# EUROPÄISCHE PATENTANMELDUNG

(11) **EP 1 523 889 A1**
(43) Veröffentlichungstag der Anmeldung: **20.04.2005**
(21) Anmeldenummer: 04024302.4
(22) Anmeldetag: 12.10.2004
(51) Int. Cl.: A22C 11/02

(54) **Rückhaltevorrichtung mit Vorentraffung**

(30) Priorität: 15.10.2003 DE 10348012
(71) Anmelder: Poly-clip System GmbH & Co. KG, 60489 Frankfurt am Main (DE)
(72) Erfinder: Ebert, Detlef, 61231 Bad Nauheim (DE); Laucks, Josef, 65934 Frankfurt (DE); Grzondziel, Walter, 60489 Frankfurt (DE)
(74) Vertreter: Eisenführ, Speiser & Partner

(57) **Zusammenfassung**

Rückhaltevorrichtung (10, 10') mit einem Bremsring (18) für eine auf ein Füllrohr (12) aufgezogene, schlauch- oder beutelförmige Verpackungshülle (14), welche gegen die Reibungskraft des das Füllrohr (12) umfänglich umschließenden Bremsrings (18) während des Füllvorgangs von dem Füllrohr (12) abgezogen wird,
dadurch gekennzeichnet, dass die Rückhaltevorrichtung (10, 10') stromaufwärts des Bremsrings (18) angeordnete Rückhaltemittel aufweist, die in die Querschnittsfläche der auf das Füllrohr (12) aufgezogenen Verpackungshülle (14) eingreifen.

## Beschreibung

Die Erfindung betrifft eine Rückhaltevorrichtung mit zwei axial gegeneinander verstellbaren Ringen (20, 22) und einem dazwischenliegenden, mittels Axialverstellung der Ringe (20, 22) gegen ein Füllrohr (12) andrückbaren Bremsring für eine auf das Füllrohr aufgezogene, schlauch- oder beutelförmige Verpackungshülle, welche gegen die Reibungskraft des das Füllrohr umfänglich umschließenden Bremsrings während des Füllvorgangs von dem Füllrohr abgezogen wird.

Wird Füllgut, wie beispielsweise Wurstbrät, Kitt- oder Dichtmasse, über das Füllrohr, welches mit einer Füllmaschine in Verbindung steht, in die (einseitig verschlossene) schlauch- oder beutelartige Verpackungshülle (nachfolgend auch Darm genannt) eingebracht, dann bildet sich am Füllrohrausgang eine Wurst. Dabei wird die Verpackungshülle, welche zuvor (von Hand oder automatisch) auf das Füllrohr aufgezogen wurde, von diesem durch den Fülldruck abgezogen.

Die eingangs genannte Rückhaltevorrichtung (nachfolgend auch Darmbremse genannt) ist hinreichend bekannt. Sie ist während des Betriebs über eine Abstützung ortfest gegenüber dem Füllrohr fixiert und umschließt dieses im Bereich dessen ausgangsseitigem Ende. Sie liegt mit ihrem das Füllrohr umschließenden Bremsring zumindest Abschnittsweise an dem Darm an. Der Bremsring, welcher typischerweise eine ringförmige Gummilippe aufweist, ist elastisch vorgespannt und drückt den Darm dabei gegen das Füllrohr an. Durch diesen Druck wird die Reibungskraft erzeugt, die dafür sorgt, dass der Darm während des Füllens kontrolliert von dem Füllrohr abgezogen wird und dass - je nach Vorspannung des Bremsrings - eine Wurst mit gewünschter Prallheit erzeugt wird.

Der auf das Füllrohr aufgezogene Darm bildet - um die Produktionszeiten gegenüber den Standzeiten während des Aufziehens des Darms zu steigern - ein Reservoir und ist daher zu Beginn des Abziehvorgangs stark gerafft. Der geraffte Darm (Darmraupe) neigt allerdings bedingt durch lange Lagerzeiten und ungünstige Lagerbedingungen dazu, zu verkleben. Zu einem gewissen Grad ist das Verkleben zwar gewünscht, um den Vorgang des Aufziehens auf das Füllrohr zu erleichtern. Es bewirkt jedoch insbesondere bei Verwendung von Textildarm, der aus der ebenen Bahn eines Textilgewebes zu einer schlauchförmigen Hülle geschlossen, d.h. geklebt oder genäht wird, aufgrund dessen Steifigkeit und der Dicke der (Klebe-) Naht immer wieder dazu, dass sich der Darm in der Darmbremse nicht vollständig entraffen lässt. Dies führt bestenfalls zu einem ungleichmäßigen Abziehen des Darms und schlimmstenfalls, bedingt durch ein Verklemmen oder Stauen des Darms in der Darmbremse einerseits und durch den Fülldruck andererseits, zum Platzen der Wurst.

Aufgabe der Erfindung ist daher, die Darmbremse prozesssicherer zu gestalten.

Diese Aufgabe wird erfindungsgemäß durch eine Rückhaltevorrichtung (Darmbremse) der eingangs genannten Art gelöst, die stromaufwärts des Bremsrings und der gegeneinander verstellbaren angeordnete Rückhaltemittel aufweist, die in die Querschnittsfläche der auf das Füllrohr aufgezogenen Verpackungshülle der Gestalt eingreifen, dass ein zwischen den Rückhaltemitteln und dem Füllrohr (12) ausgebildeter Spalt ausreichend klein ist, die Verpackungshülle (14) zurückzuhalten und eine Vorentraffung zu gewährleisten.

Das aufgezogene, geraffte Verpackungsmaterial (Darmraupe) weist üblicherweise einen deutlich größeren Querschnitt als der Außendurchmesser des Füllrohres auf. Ragen nun die Rückhaltemittel in den Bereich dieser Querschnittsfläche, so bleibt die auf dem Füllrohr geführte, Darmraupe daran hängen. Der Darm wird während des Betriebs bedingt durch den Füllvorgang jedoch weiter stromabwärts in Richtung des Bremsrings gezogen und dabei schon vor Erreichen desselben entrafft. Die Gefahr des Verklemmens in dem Bremsring oder des ungleichförmigen Abziehens wird somit reduziert. Dabei ist es vorteilhaft, die Rückhaltemittel so zu dimensionieren, dass eine Bremswirkung beim Abziehen des Darms bis auf das notwendige Maß zum Entraffen, z.B. zum Überwinden der Klebekraft, reduziert wird. Mit anderen Worten ist ein Spalt zwischen den Rückhaltemitteln und dem Füllrohr einerseits so klein zu wählen, dass die Darmraupe zurückgehalten und die erwünschte Vorentraffung gewährleistet ist, und andererseits ausreichend groß, damit der Darm ansonsten behinderungsfrei (ohne wesentlichen Reibungsverlust) passieren kann.

Bevorzug sind die Rückhaltemittel rotationssymmetrisch um das Füllrohr angeordnet. Dadurch wird die Gefahr eines Ausweichens des Darms bei Berührung mit den Rückhaltemitteln verringert und die Prozesssicherheit kann weiter erhöht werden.

Im Folgenden werden oben genannte sowie weitere Vorteile und Merkmale der Erfindung anhand zweier Ausführungsbeispiele unter Zuhilfenahme der Figuren näher erläutert. Es zeigen
- Fig. 1: eine Querschnittsdarstellung eines Ausführungsbeispiels der erfindungsgemäßen Darmbremse;
- Fig. 2: eine Querschnittsdarstellung eines zweiten Ausführungsbeispiels der erfindungsgemäßen Darmbremse.

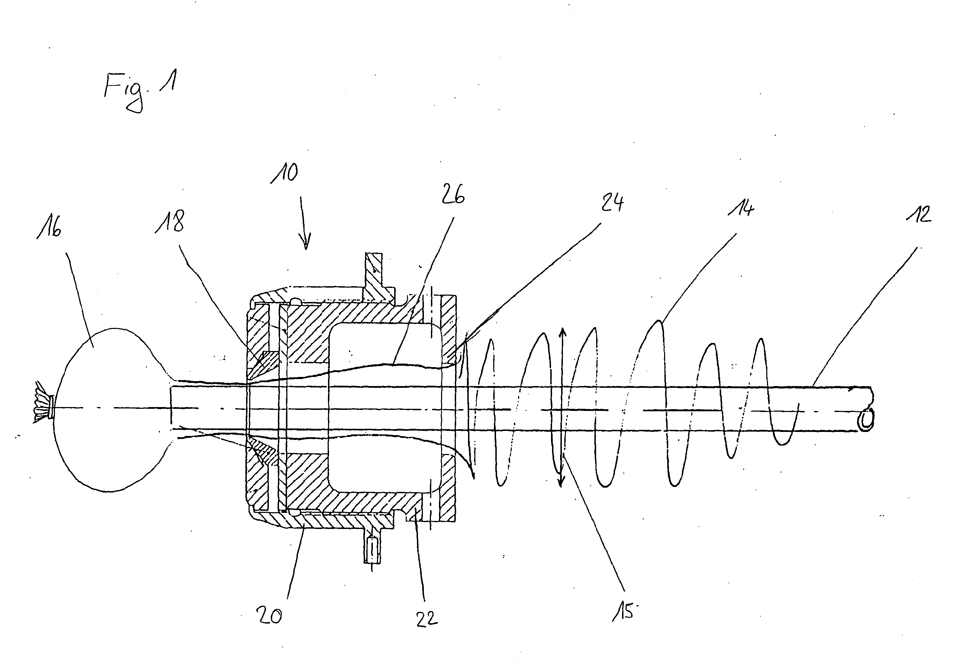

Die in Fig. 1 gezeigte Darmbremse 10 ist auf ein Füllrohr 12 aufgeschoben. Ferner ist auf das Füllrohr 12 ein geraffter Darm 14 aufgezogen, der im Bereich des ausgangsseitigen Endes (gekennzeichnet durch eine sich bildende Wurst 16) des Füllrohres 12 durch einen Bremsring 18 gegen das Füllrohr 12 angedrückt wird. Die Andrückkraft und somit letztlich die Prallheit der Wurst kann durch Verdrehen zweier über ein Gewinde gegeneinander axial verstellbarer Ringe 20 und 22 der Darmbremse 10 eingestellt werden. Hierdurch wird nämlich eine axiale Kraft auf den Bremsring 18 ausgeübt, die über eine schräge Fassung des Bremsrings 18 schließlich in eine radiale Kraft umgeleitet wird.

Der Darm 14 wird durch den Fülldruck der sich bildenden Wurst 16 gegen diese Reibungskraft des Bremsrings 18 von dem Füllrohr 12 abgezogen. Damit dies kontrolliert vonstatten geht und nicht, wie oben geschildert, durch die Verklebung des Darms zu Problemen führt, weist die Darmbremse erfindungsgemäß ein Rückhaltemittel auf, das im Fall des in Fig. 1 gezeigten Ausführungsbeispiels durch eine koaxial zu dem Füllrohr angeordnete ringförmige Blende 24 gebildet wird.

Der Darm 14 wird aufgrund des Hindernisses, das durch die Blende 24 aufgebaut wird, daran gehindert in seiner gerafften Form bis zu dem Bremsring 18 zu gelangen, da der Querschnitt der Blendenöffnung erfindungsgemäß kleiner als der Querschnitt 15 des gerafften Darms 14 ist. Der Darm wird beim Transport von der Blende in Richtung des Bremsrings durch den Spalt zwischen der Blende 24 und dem Füllrohr 12 hindurchgezogen und dabei bereits vorentrafft, wie im Bereich des Darmabschnitts 26 illustriert ist. Zwar können einzelne Falten im Darm den Spalt passieren und bis zum Bremsring 18 gelangen, jedoch wird vermieden, dass größere Bündel abgezogener, zusammenklebender Darmfalten in den Einlaufkegel der Darmbremse, der durch die Innenseite des verstellbaren Rings 22 gebildet wird, gezogen werden und diese blockieren oder verstopfen. Die Spaltbreite zwischen der Blende 24 und dem Füllrohr ist vorzugsweise geringer als 6 mm (entsprechend 12 mm Querschnittsunterschied zwischen Blendenöffnung und Füllrohraußendurchmesser), damit keine größeren Faltenpakete oder -bündel hindurchgezogen werden können und eine ausreichend sichere Vorentraffung gewährleistet ist. Ferner erweist es sich in Abhängigkeit von dem Darmmaterial (Stärke und Steifigkeit) als vorteilhaft, die Spaltbreite nicht geringer als 3 mm zu wählen, damit andererseits nicht bereits ein Stau bzw. eine Blockade des Darms vor dem Vorentraffring (Blende 24) erzeugt wird. Der axiale Abstand zwischen der Blende 24 und dem Bremsring 18 beträgt vorzugsweise mehr als 40 mm. Dies gewährleistet, dass eine Falte, die an der Blende beim Hindurchziehen hängen bleibt, ausreichend Platz hat bis zu dem Bremsring 18 zumindest teilweise aufgezogen oder gestreckt zu werden.

Die Blende 24 ist in diesem Ausführungsbeispiel einstückig an den inneren Ring 22 der Darmbremse 10 angeformt. Alternative Anordnungen und Befestigungen liegen im Ermessen des Fachmanns. Es versteht sich von selbst, dass das Rückhaltemittel auch dann ein funktionaler Bestandteil der Rückhaltevorrichtung im Sinne der Erfindung bleibt, wenn es nicht mit dieser verbunden und/oder ggf. relativ zu dieser beweglich angeordnet ist.

Vorteilhaft ist es nämlich, die Rückhaltemittel, insbesondere wenn diese das Füllrohr ringförmig umschließen, zu dem Bremsring beweglich oder möglichst nahe an diesem anzuordnen, damit das (manuelle) Durchfädeln des Darms durch die gesamte Darmbremse erleichtert wird.

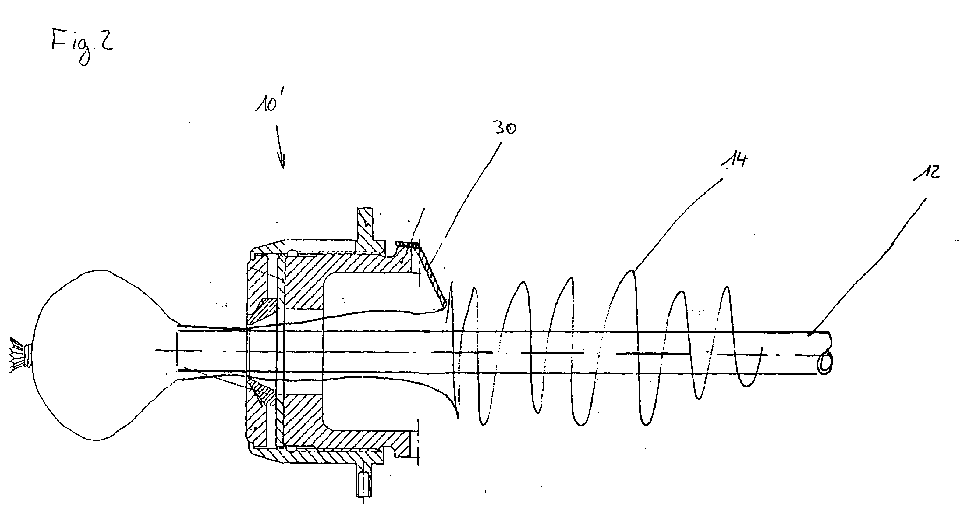

Bei einer alternativen Ausführungsform der erfindungsgemäßen Rückhaltevorrichtung 10', wie in Fig. 2 gezeigt, ragt ein Finger 30 als Rückhaltemittel in den Bereich der Querschnittsfläche des gerafften Darms 14.

Anstelle des Fingers kann auch ein Blech (mit oder ohne teilkreisförmigem Ausschnitt) vorgesehen sein.

Sowohl die ringförmig geschlossene Blende 24 als auch zumindest zwei oder mehrere rotationssymmetrisch um die Achse des Füllrohres 12 in den Querschnitt des gerafften Darms 14 hineinragende Finger (o.ä.) sind im Vergleich hierzu allerdings vorteilhaft, da sie ein Ausweichen das Darms in die dem Rückhaltemittel entgegengesetzte Richtung verhindern.

## Patentansprüche

1. Rückhaltevorrichtung (10, 10') mit zwei axial gegeneinander verstellbaren Ringen (20, 22) und einem dazwischenliegenden, mittels Axialverstellung der Ringe (20, 22) gegen ein Füllrohr (12) andrückbaren Bremsring (18) für eine auf das Füllrohr (12) aufgezogene, schlauchoder beutelförmige Verpackungshülle (14), welche gegen die Reibungskraft des das Füllrohr (12) umfänglich umschließenden Bremsrings (18) während des Füllvorgangs von dem Füllrohr (12) abgezogen wird,
**dadurch gekennzeichnet, dass** die Rückhaltevorrichtung (10, 10') stromaufwärts des Bremsrings (18) und der gegeneinander verstellbaren Ringe (20, 22) angeordnete Rückhaltemittel aufweist, die in die Querschnittsfläche der auf das Füllrohr (12) aufgezogenen Verpackungshülle (14) der Gestalt eingreifen, dass ein zwischen den Rückhaltemitteln und dem Füllrohr (12) ausgebildeter Spalt ausreichend klein ist, die Verpackungshülle (14) zurückzuhalten und eine Vorentraffung zu gewährleisten.

2. Rückhaltevorrichtung (10, 10') nach Anspruch 1, **dadurch gekennzeichnet, dass** die Rückhaltemittel rotationssymmetrisch um das Füllrohr (12) angeordnet sind.

3. Rückhaltevorrichtung (10, 10') nach Anspruch 2, **dadurch gekennzeichnet, dass** die Rückhaltemittel durch eine koaxial um das Füllrohr (12) angeordnete, ringförmige Blende 24 gebildet werden, deren Querschnitt geringer als der der aufgezogenen Verpackungshülle (14) ist.

4. Rückhaltevorrichtung (10, 10') nach einem der Ansprüche 1 bis 3, **dadurch gekennzeichnet, dass** die Rückhaltemittel relativ zu dem Bremsring (18) beweglich sind.
